(19) Europäisches Patentamt
European Patent Office
Office européen des brevets

(11) **EP 3 869 362 A1**

(12) **EUROPEAN PATENT APPLICATION**

(43) Date of publication:
**25.08.2021 Bulletin 2021/34**

(51) Int Cl.:
***G06F 17/11*** (2006.01)   ***G06N 5/00*** (2006.01)

(21) Application number: **21153119.9**

(22) Date of filing: **22.01.2021**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **18.02.2020 JP 2020025308**

(71) Applicant: **FUJITSU LIMITED**
**Kanagawa 211-8588 (JP)**

(72) Inventors:
• **PARIZY, Matthieu**
**Kawasaki-shi, Kanagawa 211-8588 (JP)**
• **MATSUOKA, Hidetoshi**
**Kawasaki-shi, Kanagawa 211-8588 (JP)**

(74) Representative: **Haseltine Lake Kempner LLP**
**Cheapside House**
**138 Cheapside**
**London**
**EC2V 6BJ (GB)**

(54) **INFORMATION PROCESSING METHOD, INFORMATION PROCESSING SYSTEM, AND PROGRAM**

(57)     An information processing system includes: a processing unit configured to: acquire a plurality of solutions each represented by values of a plurality of variables included in an energy function; calculate, for each of a plurality of sets of a variable among the plurality of variables and a candidate value of the variable, an index indicating a possibility of a certain candidate value corresponding to a certain variable being included in a solution that is better than a currently obtained solution or in an optimal solution, based on the plurality of solutions and values of the energy function respectively corresponding to the plurality of solutions; and select one set from the plurality of sets based on the index calculated for each of the plurality of sets; and an output unit configured to output an instruction to execute another search for another solution with the variable included in the selected one set fixed to the corresponding candidate value.

FIG. 1

EP 3 869 362 A1

**Description**

FIELD

The embodiments discussed herein are related to an information processing method, and an information processing system, and a program.

BACKGROUND

A combinatorial optimization problem exists in various fields in modern society. For example, a combination of elements for minimizing costs is searched for in fields such as manufacturing, distribution, and marketing. However, the calculation time for the combinatorial optimization problem exponentially increases as the number of variables corresponding to the elements increases, and thus the combinatorial optimization problem is known as a problem that is difficult to solve with a von Neumann computer.

As a method of solving the combinatorial optimization problem, there is a method of performing calculation by replacing the combinatorial optimization problem of a calculation target with an Ising model that is a model representing a behavior of a spin of a magnetic substance. For example, Markov chain Monte Carlo methods, such as simulated annealing (SA) and the replica exchange method, are used to search for a combination of values of variables that minimize or maximize the value of an Ising energy function. The combination of values of variables that minimize or maximize the value of the energy function corresponds to a ground state or an optimal solution. With the Markov chain Monte Carlo methods, the optimal solution or an approximate solution close to the optimal solution may be obtained for the combinatorial optimization problem within a reasonable amount of time.

For example, a search method for searching for an optimal solution of a discrete optimization problem has been proposed. The proposed search method includes, if many improved solutions are likely to be in the vicinity of the current solution, focusing on the search in the vicinity, and if an improved solution is less likely to be in the vicinity of the current solution, performing the search over a wide range to avoid the solution from being stuck at a local solution.

There has been proposed an information processing apparatus that creates new genes by performing crossover, mutation, and selection on a group of individuals having genes corresponding to similar trial processes, based on genetic algorithm. The proposed information processing apparatus groups individuals that are likely to involve similar phenomena in the course of the trial processes based on features at time points in the course of the trial processes. This guarantees the diversity of representative individuals of the groups that have survived as a result of the selection within the group. As a result, the diversity of newly generated individuals is maintained.

Related techniques are disclosed in, for example, Japanese Laid-open Patent Publication No. 2001-117773 and Japanese Laid-open Patent Publication No. 2016-12285.

When the solution searched for by SA or the like is stuck at a local solution, escape from the state of being in the vicinity of the local solution is difficult, and thus the optimal solution might fail to be achieved.

For example, a possible solution for searching more states to obtain a better solution may include: repeating, for a predetermined number of times, processing of providing a computer or the like with an initial state randomly determined and obtaining solutions by SA or the like; and selecting the best of the solutions thus obtained. However, this method does not necessarily result in a sufficiently increased possibility of reaching an optimal solution.

It is desirable to provide an information processing apparatus, a program, an information processing method, and an information processing system that are capable of increasing a possibility of reaching an optimal solution.

SUMMARY

According to an embodiment of one aspect of the invention, an information processing system includes: a processing unit configured to: acquire a plurality of solutions each represented by values of a plurality of variables included in an energy function; calculate, for each of a plurality of sets of a variable among the plurality of variables and a candidate value of the variable, an index indicating a possibility of a certain candidate value corresponding to a certain variable being included in a solution that is better than a currently obtained solution or in an optimal solution, based on the plurality of solutions and values of the energy function respectively corresponding to the plurality of solutions; and select one set from the plurality of sets based on the index calculated for each of the plurality of sets; and an output unit configured to output an instruction to execute another search for another solution with the variable included in the selected one set fixed to the corresponding candidate value.

One aspect may increase a possibility of reaching an optimal solution.

BRIEF DESCRIPTION OF DRAWINGS

The invention is described, by way of example only, with reference to the following drawings, in which:

FIG. 1 is a diagram illustrating an example of processing of an information processing apparatus according to a first embodiment;
FIG. 2 is a diagram illustrating a hardware example of an information processing system according to a second embodiment;
FIG. 3 is a diagram illustrating an example of functions of the information processing apparatus;
FIG. 4 is a diagram illustrating an example of an initial setting table;
FIG. 5 is a diagram illustrating a first example of a variable fixation control table;
FIG. 6 is a diagram illustrating a second example of a variable fixation control table;
FIG. 7 is a flowchart illustrating an example of processing of the information processing apparatus;
FIG. 8 is a diagram illustrating an example of a relationship between weight and bias; and
FIG. 9 is a flowchart illustrating a comparative example.

DESCRIPTION OF EMBODIMENTS

Hereinafter, the embodiments will be described with reference to the drawings.

[First Embodiment]

A first embodiment will be described.

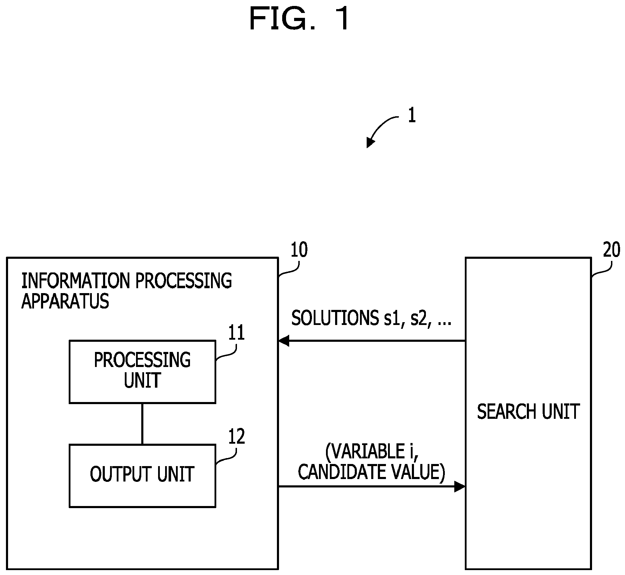

FIG. 1 is a diagram illustrating an example of processing of an information processing apparatus according to the first embodiment.
An information processing system 1 includes an information processing apparatus 10 and a search unit 20. The information processing apparatus 10 is coupled to the search unit 20. Based on an Ising energy function obtained by formulating a combinatorial optimization problem, the search unit 20 searches for an optimal solution represented by values of a plurality of variables included in the energy function, using a Markov chain Monte Carlo method, such as SA or the replica exchange method. The variables are binary or higher order discrete values. The energy function represents an energy value of the state of the Ising model represented by the values of the plurality of variables, and is also referred to as an evaluation function or an objective function. The search unit 20 outputs a solution as a result of the search. The solution includes values of a plurality of variables. There may be a plurality of the search units 20.
The information processing apparatus 10 includes a processing unit 11 and an output unit 12.
The processing unit 11 acquires a plurality of solutions from the search unit 20. Based on the plurality of solutions and values of the energy function corresponding to the plurality of solutions, the processing unit 11 calculates an index indicating the possibility of a certain candidate value of a certain variable being included in a solution, for each set of the variable and the candidate value. The processing unit 11 stores the calculated index in a storage unit (not illustrated) such as a memory included in the information processing apparatus 10.
The "solution" in the "index indicating the possibility of a certain candidate value of a certain variable being included in a solution" indicates a better solution than the currently obtained solution in a predetermined evaluation scale. For a problem of minimizing the energy value, for example, such a solution is a solution with a smaller value of the energy function. The "solution" in the "index indicating the possibility of a certain candidate value of a certain variable being included in a solution" may be an optimal solution of a combinatorial optimization problem.
Based on the index for each set of a variable and a candidate value, the processing unit 11 selects a variable fixed to the candidate value and the candidate value. A possible method for selecting a variable fixed to the candidate value and the candidate value based on the above-described index is as follows, for example.
First of all, the processing unit 11 sets instance information corresponding to a combinatorial optimization problem to the search unit 20, and causes the search unit 20 to execute a solution search. The instance information may include information such as weights among variables included in the energy function, a bias of the variable, and a constant term. Any appropriate state may be set as the initial state at the point when the search starts. For example, the processing unit 11 may randomly determine the value of each variable in the initial state. Still, as described later, the processing unit 11 may instruct the search unit 20 to make a certain variable fixed to a certain value in the initial state.
The processing unit 11 acquires solutions $s_i$, $s_2$, ... obtained by the search unit 20. The solutions $s_i$, $s_2$, ... are, for example, solutions obtained for different initial states. When there are a plurality of the search units 20, the processing unit 11 may provide the plurality of search units with different initial states, cause the plurality of search units to execute solution searches in parallel, and acquire the solutions $s_i$, $s_2$, ... from the plurality of search units. Also in the solution search described below, the processing unit 11 may similarly use a plurality of search units. With the plurality of search units used in parallel, the solutions si, s2, ... may be swiftly acquired.

The processing unit 11 acquires an energy value corresponding to each of the solutions si, s2, ... The processing unit 11 may calculate the energy value corresponding to the solution by substituting each of the solutions si, s2, ... into the energy function, or may acquire the energy value from the search unit 20, together with each of the solutions si, s2, ...

The processing unit 11 acquires the energy value corresponding to the best solution among solutions including the value of a certain variable for each set of a variable and the value of the variable. For a problem of minimizing the energy value, this "energy value corresponding to the best solution among solutions including the value of a certain variable" is the minimum energy value among energy values of solutions in which the corresponding variable is of the corresponding value. In contrast, for a problem of maximizing the energy value, this energy value is the maximum energy value among energy values of solutions in which the corresponding variable is of the corresponding value.

Based on a ratio between the energy value corresponding to the best solution acquired for each set of a variable and the value of the variable and the worst energy value among the energy values of the best solutions acquired for each set, the processing unit 11 calculates an index indicating the possibility of the corresponding value of the corresponding variable being included in a solution better than the currently obtained solution.

For example, in the problem of minimizing the energy value, Emax is assumed to be the maximum value (worst value) among minimum energy values acquired for respective sets of a variable and the value of the variable, and E is assumed to be the minimum energy value acquired for the corresponding variable and the corresponding value of the corresponding variable. Under this condition, the processing unit 11 obtains an index P indicating the possibility of the corresponding value of the corresponding variable being included in a solution better than the currently obtained solution, as $P = 1 - E/Emax$.

Alternatively, in the problem of maximizing the energy value, Emin is assumed to be the minimum value (worst value) among maximum energy values acquired for respective sets of a variable and the value of the variable, and E is assumed to be the maximum energy value acquired for the corresponding variable and the corresponding value of the corresponding variable. Under this condition, the processing unit 11 obtains an index P indicating the possibility of the corresponding value of the corresponding variable being included in a solution better than the currently obtained solution, as $P = 1 - Emin/E$.

In this case, the index P represents the level of improvement of the solution over the worst solution among solutions for respective sets of a variable and the value of the variable, as a result of setting the corresponding variable to the corresponding value. With a larger index P, for example, a higher level of improvement of the solution, the corresponding variable is anticipated to have a higher possibility of being of the corresponding value in a solution better than the currently obtained solution.

The method for calculating the index indicating the possibility of the corresponding value of the corresponding variable being included in a better solution is not limited to the above method, and various methods may be used. For example, the processing unit 11 may obtain an index, with a smaller value of the index resulting in the corresponding value of the corresponding variable anticipated to have a higher possibility of being included in a solution better than the currently obtained solution.

The processing unit 11 selects a variable to be fixed to a certain candidate value and the candidate value, based on the index obtained for each set of a variable and the value of the variable. For example, the processing unit 11 preferentially selects a set of a variable and the value of the variable with a large index P. The processing unit 11 may select a set of a variable and the value of the variable, in the descending order of the index P.

The output unit 12 outputs, to the search unit 20, an instruction to perform a search with the variable selected by the processing unit 11 fixed to the selected candidate value. For example, the output unit 12 outputs, to the search unit 20, identification information i and the candidate value for the selected variable.

The output unit 12 may output, to the search unit 20, an instruction to execute the search with the corresponding variable fixed to the corresponding candidate value over the entire search period, or may output, to the search unit 20, an instruction to execute the search with the corresponding variable fixed to the corresponding candidate value within a part of the search period. In the latter case, for example, the output unit 12 may output, to the search unit 20, an instruction to execute the search with the corresponding variable fixed to the corresponding candidate value, within a period that is equal to or longer than a predetermined percentage of the entire search period.

The search unit 20 determines an initial state of a next solution search and starts the next solution search, in accordance with an instruction received from the information processing apparatus 10. The search unit 20 executes the solution search with the variable included in the instructed set fixed to the candidate value. For example, the search unit 20 acquires, from the information processing apparatus 10, different sets of a variable fixed to a candidate value and the candidate value for each of solution searches executed a plurality of times, thereby generating a solution corresponding to each of the sets. Thus, the search unit 20 generates a plurality of solutions corresponding to the plurality of respective sets.

The processing unit 11 acquires the plurality of solutions from the search unit 20 and updates the index indicating the possibility of each set of a variable and the value of the variable being included in the solution through the same procedure as described above. The processing unit 11 may obtain the index for a set of two or more variables and values of the two or more variables. For example, the processing unit 11 may select a set of a first variable, a first candidate value of the first variable, a second variable, and a second candidate value of the second variable, based on the index. In this case, the output unit 12 outputs, to the search unit 20, an instruction to execute a search with the first variable fixed to the first candidate value and the second variable fixed to the second candidate value. The search unit 20 executes the search with both the first variable and the second variable respectively and concurrently fixed to the first candidate value and the second candidate value.

The information processing apparatus 10 and the search unit 20 repeat the above-described procedure and terminate the processing when a predetermined termination condition is satisfied. The termination condition is, for example, satisfied when a certain period of time has elapsed from the start of the initial solution search, when a solution corresponding to an energy value better than a certain energy value is obtained, or the like. The processing unit 11 acquires as a final solution, the best of the solutions acquired in the series of procedures, and notifies the user of the best solution as the final solution.

With the information processing apparatus 10, the possibility of reaching an optimal solution may be increased.

When the solution searched for using SA, the replica exchange method, or the like is stuck at a local solution, escape from the state of being in the vicinity of the local solution is difficult, and thus the optimal solution might fail to be obtained.

In view of this, for example, a possible solution for searching for more states to obtain a better solution may include: repeating processing of providing the search unit 20 with an initial state randomly determined to obtain solutions; and selecting the best of the solutions thus obtained. Unfortunately, the possibility of reaching the optimal solution is not necessarily increased sufficiently, even when the solutions are repeatedly obtained by the search unit 20 provided with initial states randomly determined. The reason is as follows.

The magnitude of the impact on the energy value obtained by the energy function varies among variables. For example, a change in an energy value as a result of setting a certain variable to a certain value may be larger than a change as a result of setting another variable to a certain value. The difference in the magnitude of the impact among variables varies among problems. This will be exemplified with the knapsack problem.

The knapsack problem is a problem of obtaining a combination yielding the maximum total value, among combinations of items put in a knapsack having a capacity upper limit C in terms of the weight or volume of contents or the like. There are a plurality of items. It is assumed that $w_i$ and $v_i$ respectively represent the weight and the value of an i-th (where i is an integer that is equal to or larger than 1) item i. Note that $w_i < C$ holds for any i.

The energy function of the knapsack problem is formulated in a quadratic form of a binary variable $x_i$, using $w_i$, $v_i$, and C, for example. With the binary variable $x_i$, for example, "1" indicates putting the item i in the knapsack and "0" indicates not putting the item i in the knapsack.

A case is considered as one example where the value is the same among all the items, for example, $v_1, v_2, ..., v_i, ... = V$ holds, but $w_1 < w_2 < ... < w_i < ...$ also holds. A combination of items selected in order of i = 1, 2, ... until the sum of $w_i$ reaches the upper limit C is a combination with the largest value, that is, the optimal solution. In this case, with the search by the search unit 20, a heavier item selected may result in a larger level of improvement in the energy value. As a result, a possibility of a heavy item being selected as an item to be put in the knapsack becomes relatively high. After such an item has been selected, a level of degradation of the energy value as a result of taking out such an item from the knapsack becomes relatively high. Thus, a possibility of such an item being taken out from the knapsack becomes low. In this manner, after the search unit 20 has selected an item that is not to be included in the optimal solution, a combination not including such an item is less likely to be selected, resulting in a lower possibility of reaching the optimal solution.

Depending on a problem, as in the example of the knapsack problem described above, solutions repeatedly obtained by the search unit 20 provided with randomly determined initial states are relatively likely to be stuck at a local solution due to a certain value of a variable not to be included in the optimal solution, and escape from the local solution may be difficult.

The information processing apparatus 10 evaluates an index indicating a possibility of each set of a variable and a candidate value of the variable being included in a better solution, and based on the index, designates a variable the candidate value of which is preferentially set over other values and the candidate value to the search unit 20. This leads to a higher chance of the search by the search unit 20 being executed in a state reflecting a set of a variable and a candidate value that is anticipated to have a relatively high possibility of being included in a better solution, whereby a possibility of reaching the optimal solution may be increased.

As described above, the processing unit 11 may instruct the search unit 20 to make a certain variable fixed to a certain value in the initial state for solving the current combinatorial optimization problem. For example, there may be a case where it has been recognized in advance that a certain variable is likely to be of a certain value in the optimal solution of the current problem, through a user analysis based on knowledge on a field of the same type as the field of the current combinatorial optimization problem, a result of solution searches in the past for problems belonging to the similar type of field, and the like. Alternatively, the processing unit 11 may recognize in advance that a certain variable is likely to be of a certain value in the optimal solution of the current problem, based on a level of impact imposed by the value of each variable on the energy function.

The processing unit 11 may designate a certain value to which a certain variable is to be fixed in the initial state to the search unit 20, by receiving the certain variable and the certain value input by the user or by acquiring the certain variable and the certain value through the analysis by the processing unit 11. Thereafter, the processing unit 11 repeats the procedure exemplified in the first embodiment, thereby updating the index indicating a possibility of the certain value of the certain variable being included in a better solution.

The processing unit 11 is realized by an integrated circuit such as a central processing unit (CPU), a digital signal processor (DSP), an application-specific integrated circuit (ASIC), a field-programmable gate array (FPGA). The processing unit 11 may be a processor that executes a program. The "processor" referred to herein may include a set of a plurality of processors (multiprocessor).

The search unit 20 may be realized by hardware that executes SA, the replica exchange method, or the like by using a digital circuit, or may be realized by hardware that executes quantum annealing. The hardware that executes SA, the replica exchange method, or quantum annealing may be referred to as an optimization apparatus. The search unit 20 may be realized by a processor such as a CPU of the information processing apparatus 10 or may be realized by a processor different from the processor such as the CPU of the information processing apparatus 10.

The output unit 12 is realized by an IO interface that performs input/output (IO) to/from a memory in the search unit 20 or a memory in the information processing apparatus 10 referred to by the search unit 20. When the search unit 20 is realized by another device coupled via a network, the output unit 12 may be realized by a communication interface such as a network interface card (NIC).

[Second Embodiment]

Next, a second embodiment will be described.

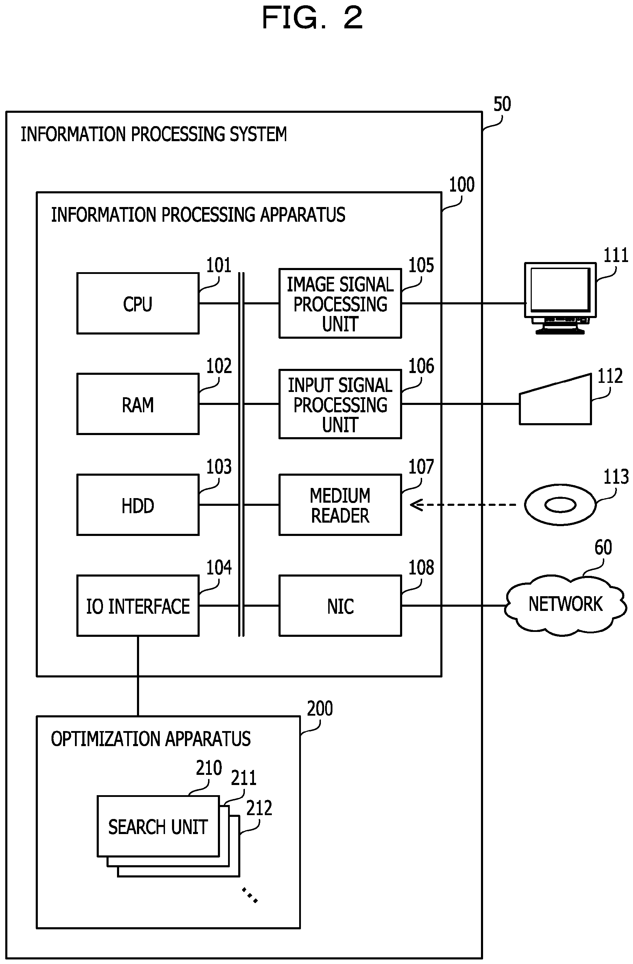

FIG. 2 is a diagram illustrating a hardware example of an information processing system according to the second embodiment.

An information processing system 50 includes an information processing apparatus 100 and an optimization apparatus 200.

The information processing apparatus 100 includes a CPU 101, a random-access memory (RAM) 102, a hard disk drive (HDD) 103, an IO interface 104, an image signal processing unit 105, an input signal processing unit 106, a medium reader 107, and an NIC 108. The CPU 101 corresponds to the processing unit 11 according to the first embodiment. The IO interface 104 corresponds to the output unit 12 according to the first embodiment.

The CPU 101 is a processor that executes a command of a program. The CPU 101 loads at least a part of a program or data stored in the HDD 103 into the RAM 102, and executes the program. The CPU 101 may include a plurality of processor cores. The information processing apparatus 100 may include a plurality of processors. A set of the plurality of processors will be referred to as a "multiprocessor" or merely referred to as a "processor" in some cases.

The RAM 102 is a volatile semiconductor memory that temporarily stores the program executed by the CPU 101 and data used for the operation by the CPU 101. The information processing apparatus 100 may include memories of types other than the RAM, and may include a plurality of memories.

The HDD 103 is a non-volatile storage device that stores data as well as software programs such as an operating system (OS), middleware, and application software. The information processing apparatus 100 may include other types of storage devices such as a flash memory and a solid-state drive (SSD), and may include a plurality of non-volatile storage devices.

The IO interface 104 is coupled to the optimization apparatus 200 and inputs and outputs data to and from the optimization apparatus 200 in accordance with an instruction from the CPU 101. For example, the IO interface 104 writes data, in the RAM 102, to a register or a memory of the optimization apparatus 200, and reads the data from the optimization apparatus 200 and writes the data to the RAM 102, in accordance with an instruction from the CPU 101. As the IO interface 104, for example, a Peripheral Component Interconnect-Express (PCI-e) or the like is used.

The image signal processing unit 105 outputs an image to a display 111 coupled to the information processing apparatus 100 in accordance with a command from the CPU 101. As the display 111, any type of display such as a cathode ray tube (CRT) display, a liquid crystal display (LCD), a plasma display, or an organic electro-luminescence (OEL) display may be used.

The input signal processing unit 106 acquires an input signal from an input device 112 coupled to the information processing apparatus 100, and outputs the input signal to the CPU 101. As the input device 112, a pointing device such as a mouse, a touch panel, a touchpad, or a trackball, a keyboard, a remote controller, a button switch, or the like may be used. A plurality of types of input devices may be coupled to the information processing apparatus 100.

The medium reader 107 is a reading device that reads programs and data recorded in a recording medium 113. As the recording medium 113, for example, a magnetic disk, an optical disk, a magneto-optical disk (MO), a semiconductor memory, or the like may be used. The magnetic disk includes a flexible disk (FD) or an HDD. The optical disk includes a compact disc (CD) or a digital versatile disc (DVD).

The medium reader 107 copies, for example, the program and data read from the recording medium 113 to another recording medium such as the RAM 102 or the HDD 103. The read program is executed by, for example, the CPU 101. The recording medium 113 may be a portable recording medium, or may be used to distribute the program and data. The recording medium 113 and the HDD 103 may be referred to as a computer-readable recording medium.

The NIC 108 is coupled to the network 60 and is an interface that communicates with another computer via the network 60. For example, the NIC 108 is coupled to a communication device such as a switch or a router included in the network 60 with a cable.

The optimization apparatus 200 is an accelerator that performs, with hardware, a ground state search using SA or the replica exchange method, based on an energy function obtained by formulating the combinatorial optimization problem. The optimization apparatus 200 is realized by using, for example, a semiconductor integrated circuit such as an FPGA. The optimization apparatus 200 may be referred to as an Ising machine, an Ising optimization apparatus, or the like. The optimization apparatus 200 may be hardware that performs a ground state search using quantum annealing. The optimization apparatus 200 may be realized by another information processing apparatus having the same configuration as the information processing apparatus 100.

The optimization apparatus 200 includes search units 210, 211, 212, ... The search units 210, 211, 212, ... search for the ground state using SA, the replica exchange method, or the like. The optimization apparatus 200 may further include a control unit that controls execution of the ground state search by the search units 210, 211, 212, ... and communication with the information processing apparatus 100.

Instead of the optimization apparatus 200, the CPU 101 may execute predetermined software to realize the function of the search unit 20 that executes SA, the replica exchange method, simulated quantum annealing (SQA), or the like.

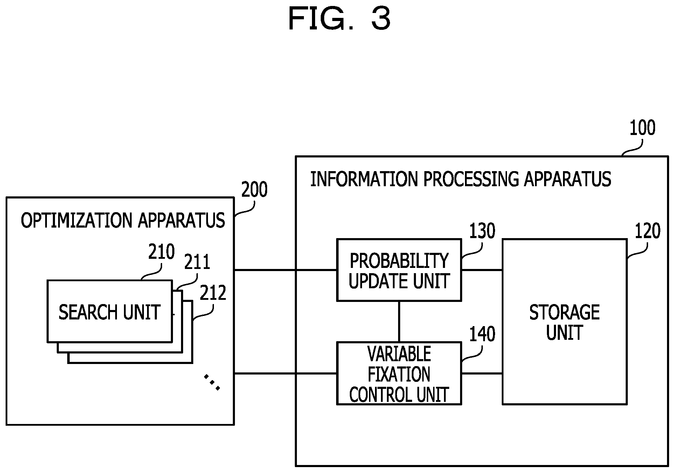

FIG. 3 is a diagram illustrating an example of functions of the information processing apparatus.

The information processing apparatus 100 includes a storage unit 120, a probability update unit 130, and a variable fixation control unit 140. As the storage unit 120, a storage area of the RAM 102 or the HDD 103 is used. The probability update unit 130 and the variable fixation control unit 140 are realized by programs.

The storage unit 120 stores data used for processing executed by the probability update unit 130 and the variable fixation control unit 140. The storage unit 120 stores an initial setting table and a variable fixation control table.

The initial setting table is a table in which initial values of indices indicating possibilities of combinations of candidate variables and candidate values being included in an optimal solution are registered. The index may be referred to as a score. The "candidate variable" is a variable that is a candidate for which a certain value is preferentially set, among a plurality of variables included in the energy function. The candidate value is a certain value that serves as a candidate to be preferentially set to the candidate variable.

In the second embodiment, the "index indicating the possibility" of a combination of the candidate variable and the candidate value being included in the optimal solution is referred to as "probability" for the sake of convenience.

The candidate variable and the candidate value are determined in advance based on information on the current combinatorial optimization problem to be solved. For example, the candidate variable and the candidate value are determined based on knowledge on a field to which the relevant problem belongs, know-how or heuristic analysis on how to solve the problem, or a combination of these. Examples of the field to which the problem belongs include: optimization of a picking route and inventory management for a warehouse in manufacturing/distribution; optimization of a delivery plan in logistics; optimization of an investment portfolio in finance; molecular similarity search in drug discovery; and the like. In one possible example, the magnitude of the impact on the energy value obtained from the energy function corresponding to the problem is evaluated in advance for each variable, a predetermined number of variables are set as candidate variables in the descending order of the magnitude of the impact, and possible values of the variables may be set as the candidate values. The magnitude of the influence of each variable on the energy value may be emphasized by a nonlinear function for each variable and evaluated.

The determination of the candidate variable and the candidate value may be performed by the information processing apparatus 100, or may be performed based on analysis performed in advance by the user for the problem.

The variable fixation control table is a table for managing updated probabilities for sets of candidate variables and candidate values.

The probability update unit 130 updates the probability of the set of the candidate variable and the candidate value being included in the optimal solution, based on the plurality of solutions obtained by the search units 210, 211, 212, ... and the plurality of energy values corresponding to the plurality of solutions. For example, the probability update unit 130 extracts the worst solution among a plurality of solutions each including any candidate variable and the candidate value of the candidate variable. The probability update unit 130 calculates the level of improvement of the energy value by the best solution corresponding to a set of a candidate variable of interest and a candidate value over the extracted worst solution. The calculated level is obtained as the new probability for the set of the candidate variable of interest and the candidate value.

For example, in the problem of minimizing the energy value, the minimum energy value among a plurality of solutions with the candidate variable of interest being of the candidate value is assumed to be E1. The maximum energy value among a plurality of solutions obtained for any candidate variable and a candidate value is assumed to be Emax. Under these conditions, the probability update unit 130 obtains 1 - E1/Emax as the new probability, for example.

The probability thus calculated represents the level of improvement over the worst solution, achieved by the solution with the candidate variable set to be of the candidate value. Thus, a set of a candidate variable and a candidate value with a higher probability, for example, a higher level of improvement of the solution is anticipated to have a higher possibility of being included in the optimal solution.

The probability update unit 130 registers the new probability thus obtained in the variable fixation control table stored in the storage unit 120.

The variable fixation control unit 140 instructs the search units 210, 211, 212, ... to execute a search with the corresponding candidate value set with priority over other values, for the candidate variable selected by the probability update unit 130. For example, the variable fixation control unit 140 designates a set of a candidate variable and a candidate value to the search units 210, 211, 212, ..., and causes the search units to execute solution searches with the candidate variable fixed to the candidate value.

In the example of the second embodiment, the variable fixation control unit 140 controls the search units 210, 211, 212, ... to make the candidate variable fixed to the candidate value over the entire solution search period, for example, over all the iterations. A single iteration indicates a single trial of changing the value of a variable. However, the variable fixation control unit 140 may control the search units 210, 211, 212, ... to make the candidate variable fixed to the candidate value within a period that is a predetermined percentage of the entire solution search period, for example, over a predetermined percentage of the iterations or more, instead of making the candidate variable completely fixed to the candidate value. In this case, the predetermined percentage may be any percentage such as 50% or 80%. The percentage may be bias-adjustable in response to designation by a user.

The variable fixation control unit 140 uses, for example, a greedy algorithm to select a candidate variable and a candidate value designated to the search units 210, 211, 212, ... For example, the variable fixation control unit 140 instructs the search units 210, 211, 212, ... to execute the search with the variables fixed to the candidate values, one by one from the one determined to have the largest impact on the improvement of the energy value. In this example, as described above, a set of a candidate variable and a candidate value with a higher probability of being included in the optimal solution is anticipated to be more likely to improve the energy value corresponding to the solution. Thus, with the set with a higher probability preferentially selected, a possibility of more swiftly reaching the optimal solution increases.

The variable fixation control unit 140 may designate different sets of candidate variables and candidate values to the search units 210, 211, 212, ..., to make the search units 210, 211, 212, ... execute in parallel the searches for solutions with different candidate variables fixed to different candidate values.

Each of the search units 210, 211, 212, ... searches for the ground states using SA, the replica exchange method, or the like, based on the energy function.

An Ising energy function E(x) is defined by, for example, the following Equation (1). In the Equation, a state represented by a plurality of state variables or a state vector is represented by "x" without a suffix. The state variables are binary variables with a value "0" or "1". A plurality of state variables may be combined to express a ternary or a higher order variable. A case where the energy value is minimized will be described below. The signs may be reversed for a case where the energy value is maximized.

$$E(\boldsymbol{x}) = -\sum_{\langle i,j \rangle} W_{ij} x_i x_j - \sum_i b_i x_i \qquad (1)$$

A first term on a right side of Equation (1) is obtained by integrating a product of values of two state variables and a coupling coefficient without omission and duplication for all combinations of two state variables that are selectable from all state variables. $x_i$ is an i-th state variable. $x_j$ is a j-th state variable. A coupling coefficient $W_{ij}$ indicates a strength (or a weight) of coupling between the i-th state variable and the j-th state variable. For a matrix W = {$W_{ij}$}, there are many cases where $W_{ij} = W_{ji}$ and $W_{ii} = 0$. A suffix i added to the variable, such as the state variable $x_i$, is identification information of the variable and is referred to as an index.

A second term on the right side of Equation (1) is a sum of products of respective bias values of all the state variables and values of the state variables. $b_i$ indicates a bias value for an i-th state variable.

For example, "-1" of a spin in the Ising model corresponds to a value "0" of the state variable. "+1" of the spin in the Ising model corresponds to a value "1" of the state variable.

In a case where a value of the state variable $x_i$ changes to become $1-x_i$, an increase amount of the state variable $x_i$ is represented as $\delta_{xi} = (1 - x_i) - x_i = 1 - 2x_i$. Therefore, an energy change $\Delta E_i$ accompanying a change in the state variable $x_i$ for the energy function $E(x)$ is represented by Equation (2).

$$\Delta E_i = E(x)\Big|_{x_i \to 1-x_i} - E(x)$$
$$= -\delta x_i \left( \sum_j W_{ij} x_j + b_i \right)$$
$$= -\delta x_i h_i$$
$$= \begin{cases} -h_i & for \; x_i = 0 \to 1 \\ +h_i & for \; x_i = 1 \to 0 \end{cases} \tag{2}$$

$h_i$ is referred to as a local field and is represented by Equation (3).

$$h_i = \sum_j W_{ij} x_j + b_i \tag{3}$$

A change amount $\delta h_i^{(j)}$ of the local field $h_i$, in a case where the state variable $x_j$ is changed, is represented by Equation (4).

$$\delta h_i^{(j)} = \begin{cases} +W_{ij} & for \; x_j = 0 \to 1 \\ -W_{ij} & for \; x_j = 1 \to 0 \end{cases} \tag{4}$$

The optimization apparatus 200 holds the local field $h_i$ in a memory or a register of the optimization apparatus 200, and adds the change amount $\delta h_i^{(j)}$ to $h_i$ in a case where the value of the state variable $x_j$ changes, thereby obtaining $h_i$ corresponding to a state after the bit inversion.

For example, gradient descent may be used for searching for the ground state for minimizing the energy E. However, with gradient descent, once the solution is stuck at a local solution, it is impossible to escape from the local solution.

In view of this, in the optimization apparatus 200, a Metropolis method or a Gibbs method is used to determine whether to allow a state transition (change in a value of the state variable $x_i$) in which the energy change becomes $\Delta E_i$ in the search of the ground state. For example, the optimization apparatus 200 stochastically allows not only a state where energy is lowered but also transition to a state where energy is increased in a neighbor search for searching for transition from a certain state to another state where energy is lower than energy of the state. For example, a probability $A(\Delta E)$ that accepts a change in a value of a state variable of the energy change $\Delta E$ is represented by Equation (5).

$$A(\Delta E) = \begin{cases} \min\left[1, \exp(-\beta \cdot \Delta E)\right] & Metropolis \\ 1/\left[1 + \exp(\beta \cdot \Delta E)\right] & Gibbs \end{cases} \tag{5}$$

Here, an inverse temperature $\beta$ is a reciprocal ($\beta = 1/T$) of a temperature T (T > 0). A min operator indicates that a minimum value of an argument is taken. Therefore, for example, in a case where the Metropolis method is used and the energy change $\Delta E$ satisfies Equation (6) for a uniform random number u (0 < u ≤ 1), the change in the value of the state variable is allowed.

$$\ln(u) \times T \leq -\Delta E \qquad\qquad (6)$$

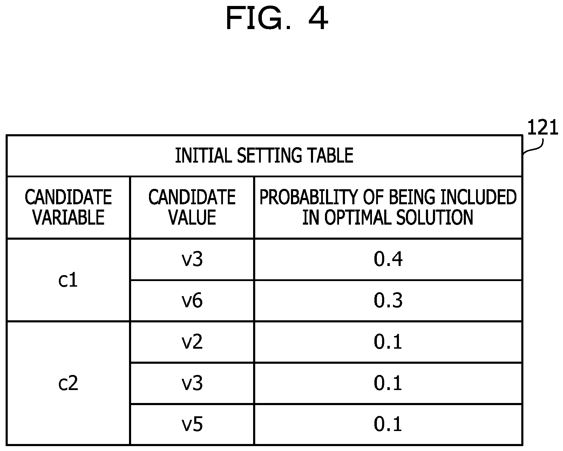

FIG. 4 is a diagram illustrating an example of the initial setting table.

An initial setting table 121 is stored in the storage unit 120 in advance. The initial setting table 121 includes items including candidate variable, candidate value, and probability of being included in an optimal solution.

The identification information on the candidate variable is registered on the item of candidate variable. A candidate value is registered on the item of candidate value. An initial value of a probability of the corresponding candidate value of the corresponding candidate variable being included in the optimal solution is registered on the item of probability of being included in the optimal solution.

For example, a record registered in the initial setting table 121 includes a candidate variable "c1", a candidate value "v3", and a probability "0.4" of being included in the optimal solution. This record indicates that an initial value of a probability of the candidate variable c1 = the candidate value v3 being included in the optimal solution, for example, a probability of the candidate variable c1 being of the candidate value v3 in the optimal solution is "0.4".

A record registered in the initial setting table 121 includes a candidate variable "c1", a candidate value "v6", and a probability "0.3" of being included in the optimal solution. This record indicates that an initial value of a probability of the candidate variable c1 being of the candidate value v6 in the optimal solution is "0.3".

A record registered in the initial setting table 121 includes a probability variable "c2", a candidate value "v2", and a probability "0.1" of being included in the optimal solution. This record indicates that an initial value of a probability of the candidate variable c2 being of the candidate value v2 in the optimal solution is "0.1".

In the example of the initial setting table 121, the initial values of the probability of being included in the optimal solution are similarly registered for a set of the candidate variable c2 and the candidate value v3, and for a set of the candidate variable c2 and the candidate value v5.

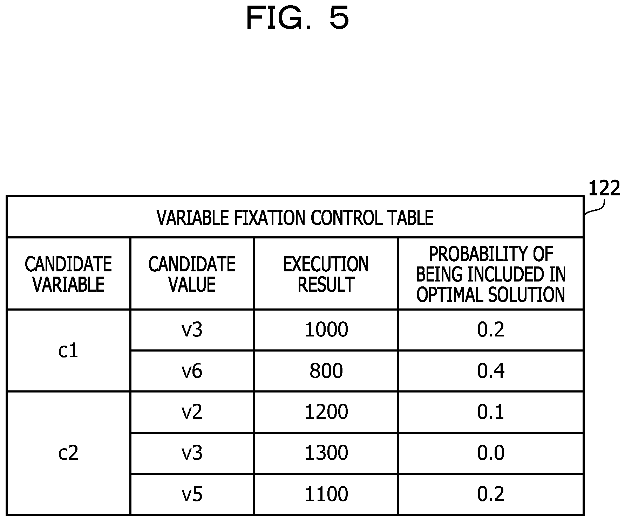

FIG. 5 is a diagram illustrating a first example of a variable fixation control table.

A variable fixation control table 122 is stored in the storage unit 120. The variable fixation control table 122 is updated by the probability update unit 130. The variable fixation control table 122 includes items including candidate variable, candidate value, execution result, and probability of being included in the optimal solution.

The identification information on the candidate variable is registered on the item of candidate variable. A candidate value is registered on the item of candidate value. The energy value corresponding to the best solution among solutions in which the corresponding candidate variable is of the corresponding candidate value is registered on the item of execution result. In this example, the problem of minimizing the energy function is considered. Thus, the energy value corresponding to the best solution among solutions in which the corresponding candidate variable is of the corresponding candidate value is the minimum energy value among the solutions in which the corresponding candidate variable is of the corresponding candidate value. A probability of the corresponding candidate of the corresponding candidate variable being included in the optimal solution is registered on the item of probability of being included in the optimal solution. The probability is the new probability updated based on the current execution result.

For example, a record registered in the variable fixation control table 122 includes a candidate variable "c1", a candidate value "v3", an execution result "1000", and a probability "0.2" of being included in the optimal solution. This record indicates that the energy value corresponding to the best solution with the candidate variable c1 = the candidate value v3 is 1000, and the probability of the candidate variable c1 being of the candidate value v3 in the optimal solution is "0.2".

Considering the equation for the new probability described above, E1 = 1000 and Emax = 1300 in the example of the variable fixation control table 122. Thus, the new probability p for the set of the candidate variable c1 and the candidate value v3 is p = 1 - 1000/1300 = 1 - 0.7692 ... = 0.2307 ... ≈ 0.2.

In the example of the variable fixation control table 122, the execution results and the probabilities of being included in the optimal solution are also registered for a set of the candidate variable c1 and the candidate value v6, a set of the candidate variable c2 and the candidate value v2, a set of the candidate variable c2 and the candidate value v3, and a set of the candidate variable c2 and the candidate value v5.

Next, an example of a variable fixation control table as a result of updating the variable fixation control table 122 will be described.

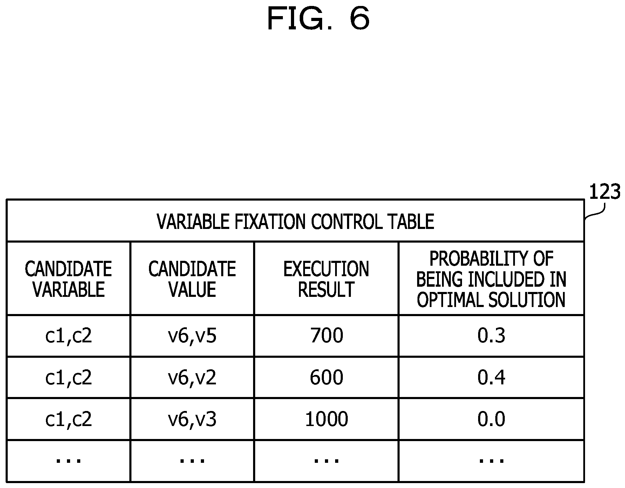

FIG. 6 is a diagram illustrating a second example of a variable fixation control table.

A variable fixation control table 123 is stored in the storage unit 120. The variable fixation control table 123 is a variable fixation control table as a result of updating the variable fixation control table 122.

Items included in the variable fixation control table 123 are the same as those in the variable fixation control table 122, and thus description thereof is omitted.

For example, a record registered in the variable fixation control table 123 includes candidate variables "c1, c2", candidate values "v6, v5", an execution result "700", and a probability "0.3" of being included in the optimal solution. This record indicates that the energy value corresponding to the best solution with the candidate variable c1 being of the candidate value v6 and the candidate variable c2 being of the candidate value v5 is 700, and the probability of the candidate variable c1 being of the candidate value v6 and the candidate variable c2 being of the candidate value v5 in the optimal solution is "0.3".

In the example of the variable fixation control table 123, the execution results and the probabilities of being included in the optimal solution are also registered for combinations between a set of candidate variables and each of a plurality of sets of candidate values, such as the candidate variables (c1, c2) = (v6, v5), (v6, v3), ....

In the above example, two candidate variables, such as the candidate variables c1 and c2, are exemplified, but the number of candidate variables may be three or more. For example, in a variable fixation control table as a result of updating the variable fixation control table 123, a set of candidate values for a set having three or more candidate variables as elements, execution result, and probability of being included in the optimal solution may be registered. For example, the probability update unit 130 may increase the number of candidate variables included in the set to be the probability calculation target, each time the execution result is obtained.

The number of candidate variables included in the set to be the probability calculation target is referred to as a "combination size". For example, when the combination size is "1", the probability update unit 130 sets the number of candidate variables included in the set to be the probability calculation target to "1". When the combination size is "2", the probability update unit 130 sets the number of candidate variables included in the set to be the probability calculation target to "2". For example, information on the combination size is stored in the storage unit 120.

Next, a process procedure in the information processing apparatus 100 will be described. Before the following procedure is executed, the information processing apparatus 100 sets instance information on the problem to the optimization apparatus 200. The instance information includes various parameters such as temperature information and information indicating an energy function, used in SA and the replica exchange method. The information indicating the energy function includes information on a weighting factor, a bias value, and a constant term.

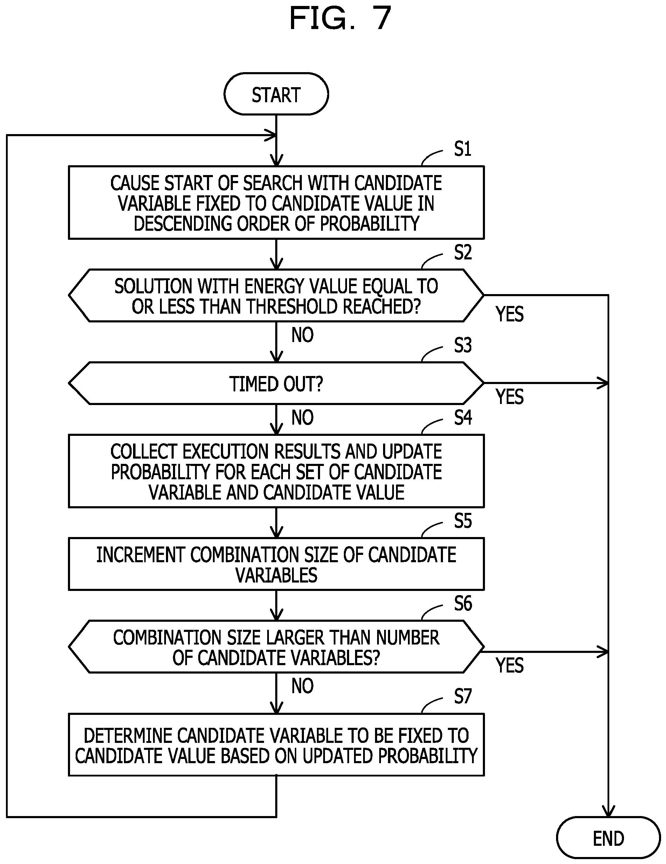

FIG. 7 is a flowchart illustrating an example of processing of the information processing apparatus.

(S1) The variable fixation control unit 140 fixes the candidate variables to the candidate values in the descending order of the probability of being included in the optimal solution, and makes the search units 210, 211, 212, .... start the search. When step S1 is executed for the first time for the current problem, the variable fixation control unit 140 selects a set of a candidate variable and a candidate value based on the initial setting table 121. When step S1 is executed for the second time or thereafter for the current problem, the variable fixation control unit 140 selects a set of a candidate variable and a candidate value based on the latest variable fixation control table, as in step S7 described later. The number of sets of candidate variables and candidate values to be selected for each of the first search, the second search, and thereafter may be set in the storage unit 120 in advance. The variable fixation control unit 140 preferably selects different sets of candidate variables and candidate values respectively instructed to the search units 210, 211, 212, ..., so that no set is redundantly selected. The variable fixation control unit 140 may randomly provide variables other than the candidate variables to be fixed, with initial values, for example.

(S2) The probability update unit 130 determines whether any of the search units 210, 211, 212, ... has reached a solution with an energy value equal to or less than a threshold. When the solution with the energy value equal to or less than the threshold has been reached, the probability update unit 130 terminates the processing. When the solution with the energy value equal to or less than the threshold has not been reached, the probability update unit 130 advances the processing to step S3.

For example, the probability update unit 130 may set the threshold to the search units 210, 211, 212, ... in advance. When the solution with the energy value equal to or less than the threshold has been obtained by any of the search units, the probability update unit 130 may be notified of the fact that the solution with the energy value equal to or less than the threshold has been obtained from the corresponding search unit, and determine YES in step S2.

(S3) The probability update unit 130 determines whether the search by the search units 210, 211, 212, ... has timed out, for example, whether a predetermined period of time has elapsed after the start of the search. When it has timed out, the probability update unit 130 terminates the processing. When it has not timed out, the probability update unit 130 advances the processing to step S4.

(S4) The probability update unit 130 collects the execution results from the search units 210, 211, 212, ... and updates the probability for each set of a candidate variable and a candidate value. The probability update unit 130 registers the execution results collected from the search units 210, 211, 212, ... as well as the updated probabilities corresponding to the execution results, in the current variable fixation control table. The number of candidate variables included in the set that is the probability calculation target depends on the combination size. The initial value of the combination size is "0". When the combination size is "0" in step S4, the probability update unit 130 sets the number of candidate variables included in the set of a candidate variable and a candidate value that is the probability calculation target to "1".

(S5) The probability update unit 130 increments the combination size of the candidate variables. For example, the probability update unit 130 increases the combination size by one.

(S6) The variable fixation control unit 140 determines whether the combination size is larger than the number of candidate variables. When the combination size is larger than the number of candidate variables, the variable fixation control unit 140 terminates the processing. When the combination size is equal to or smaller than the number of candidate variables, the variable fixation control unit 140 advances the processing to step S7.

(S7) The variable fixation control unit 140 selects a candidate variable to be fixed to a candidate value, based on the latest variable fixation control table updated by the probability update unit 130. Based on the latest variable fixation control table, the variable fixation control unit 140 selects a predetermined number of sets of candidate variables and candidate values, in the descending order of the probability of being included in the optimal solution. When the combination size is "2" or more, the variable fixation control unit 140 preferentially selects sets of two or more candidate variables and two or more candidate values respectively set to the two or more candidate variables, with high probabilities of being included in the optimal solution. The variable fixation control unit 140 advances the processing to step S1.

When the information processing apparatus 100 terminates the procedure of FIG. 7 in response to the determination in any of steps S2, S3, and S6, the information processing apparatus 100 notifies the user of the best of the solutions obtained by the search units 210, 211, 212, ... that is the solution with the minimum energy value for example, as the solution to the current problem.

The initial setting table 121 may not be provided with the initial value of the probability. In such a case, all the variables and values that may be set to the variables are treated equally, in the initial solution searches by the search units 210, 211, 212, ... For example, only a set of a candidate variable and a candidate value may be designated in the initial setting table 121.

Alternatively, the information processing apparatus 100 may not be provided with any of the information in the initial setting table 121, and treat all the variables in the energy function as candidate variables. In this case, based on the result of the initial solution searches by the search units 210, 211, 212, ..., the probability of each set of a candidate variable and a candidate value being included in the optimal solution is updated. Based on this probability, the sets of candidate variables to be fixed and candidate values in the second solution search and thereafter are narrowed down.

In step S4, the probability update unit 130 may acquire a plurality of solutions and a plurality of energy values corresponding to the plurality of solutions from the search units 210, 211, 212, ..., or may obtain an energy value corresponding to the solution by substituting the acquired solution into an energy function.

An example where in step S7, the variable fixation control unit 140 selects sets of candidate variables and candidate values in the descending order of the probability has been described. Alternatively, a set of a candidate variable to be fixed and a candidate value may be selected based on a random number corresponding to the probability. The variable fixation control unit 140 may select only a set of a candidate variable and a candidate value the probability of being included in the optimal solution of which is equal to or greater than a predetermined value.

In this manner, the information processing apparatus 100 calculates the probability of the candidate value of the candidate variable being included in the optimal solution, based on the plurality of solutions obtained by the search units 210, 211, 212, ... and the plurality of energy values corresponding to the plurality of solutions. Based on the probability, the information processing apparatus 100 selects the candidate variable fixed to the candidate value and the candidate value, and outputs, to the search units 210, 211, 212, ..., an instruction to execute the search with the selected candidate variable fixed to the candidate value.

Each of the search units 210, 211, 212, ... searches for a solution with the candidate variable instructed by the information processing apparatus 100 fixed to the candidate value.

This may increase the possibility of reaching an optimal solution.

When the solution searched for using SA, the replica exchange method, or the like is stuck at a local solution, escape from the state of being in the vicinity of the local solution is difficult, and thus the optimal solution might fail to be obtained.

An example of a possible solution to address this may include: repeating processing of providing the search units 210, 211, 212, ... with initial states randomly determined to obtain solutions; and selecting the best of the solutions thus obtained. Unfortunately, the possibility of reaching the optimal solution is not necessarily increased sufficiently, even when the solutions are repeatedly obtained by the search units 210, 211, 212, ... provided with initial states randomly determined.

A knapsack problem is considered as an example of the combinatorial optimization problem. There are wide range of fields to which the knapsack problem is applicable. As one example of such, optimization of portfolio in fields of finance or management will be described.

The weight of the content in the knapsack is associated with a budget, and C represents a total budget. There are a plurality of selection candidate items, and $w_i$ represents a budget for selecting an i-th item i (i is an integer that is equal to or larger than 1) and $v_i$ represents a profit as a result of selecting the item i. Note that $w_i < C$ holds for any i.

The energy function E of the knapsack problem is formulated in a quadratic form of a binary variable $x_i$, using

$w_i$, $v_i$, and C, for example, as in Equation (7). With the binary variable $x_i$, for example, "1" represents selecting the item i and "0" represents not selecting the item i.

$$E = -\sum_i x_i v_i + \alpha \left( \sum_i x_i w_i - C + y \right)^2 \qquad (7)$$

A first term on the right side of Equation (7) represents the sum of profits of the selected items. An object is to obtain a combination of items i yielding the highest sum of profits. The first term on the right side of Equation (7) has a minus sign, meaning that the highest sum of profits is obtained with the minimum first term on the right side.

Furthermore, a constraint that sum of budgets for the selected items i is to be C or smaller is imposed. A second term on the right side of Equation (7) is a constraint term indicating the constraint. a is a constant provided in advance. y is an auxiliary variable known as a slack variable, and is introduced to transform an inequality constraint into an equality constraint. With the slack variable y, when $\Sigma x_i * w_i < C$ holds, y is added as a requirement, so that the entire constraint term becomes 0. The search units 210, 211, 212, ... optimize the slack variable y to a relatively small value, and thus may acquire an optimal solution even when y = 0. As a result, Equation (7) is transformed into Equation (8).

$$E = \sum_i x_i (-v_i + w_i^2 - 2C w_i)$$
$$+ 2 \sum_i \sum_j w_i w_j x_i x_j + C^2 \qquad (8)$$

In Equation (8), $(-v_i + w_i^2 - 2C w_i)$ represents a bias value of the Ising model. $w_i$ represents a weight of a variable of the Ising model.

For example, i = 1, 2, 3, ..., 50 holds. $v_1, v_2, v_3, ..., v_{50} = 100$ holds. $w_i$ is assumed to take a value [1, 50] ($w_i$ = 1, $w_2$ = 2, $w_3$ = 3, ..., $w_{50}$ = 50). Furthermore, C = 100 holds.

Under this condition, the optimal solution with $x_i$ = 0 is achieved when $x_1 = x_2 = x_3 = ... = x_{13}$ = 1 and i = 14 to 50 hold. However, for example, when $x_i$ = 0 holds with any i in the initial state, the weight $w_i$ in the second term on the right side in Equation (8), for example, the budget for the item i imposes no impact on the energy function. As a result, an item i = 50 with the lowest bias value is relatively likely to be selected. The item i = 50 is an item not to be selected with the optimal solution.

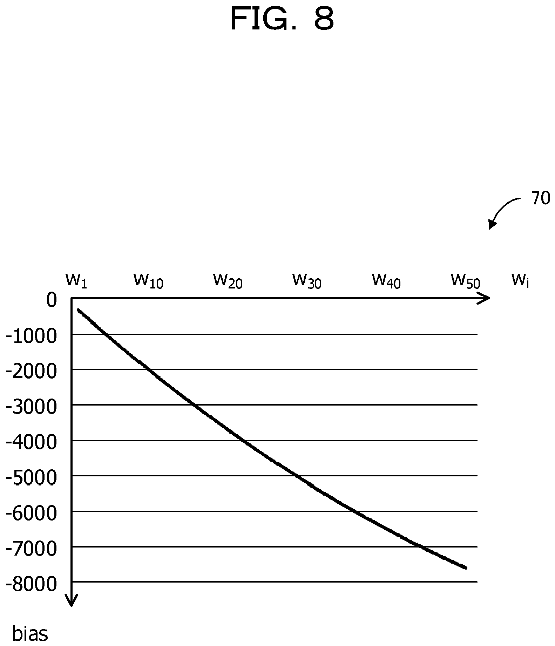

FIG. 8 is a diagram illustrating an example of a relationship between a weight and a bias.

A graph 70 illustrates an example of a relationship between the weight ($w_i$) and a bias value (bias) expressed by Equation (8). The horizontal axis of the graph 70 represents the weight ($w_i$). The vertical axis of the graph 70 represents the bias value (bias). As illustrated, the bias value for the item i = 50 is very small. Therefore, the item i = 50 may be relatively likely to be selected. The level of degradation of the energy value as a result of unselecting the item i = 50 that has been selected is relatively large. Thus, the item i = 50 is less likely to be unselected, meaning that a state where the item i = 50 is unselected is less likely to be achieved. For example, even in the state where the item i = 50 is selected, selection/unselection of many other items is repeated through trial and error, and this may result in some of the variables included in the combination of the optimal solution set to be the values in the optimal solution. Still, the item i =50 would not be unselected unless the energy value is relatively largely changed by other many variables. Thus, the optimal solution is highly unlikely to be reached.

Next, a comparative example of a processing procedure for the information processing apparatus 100 will be described. In the comparative example, the CPU 101 executes the processing.

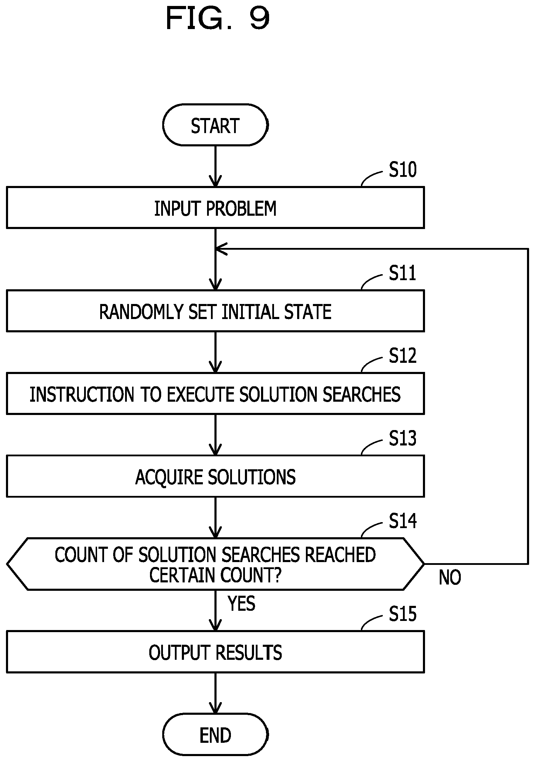

FIG. 9 is a flowchart illustrating the comparative example.

(S10) The CPU 101 inputs instance information on the problem to the optimization apparatus 200. As described above, the instance information includes various parameters such as a temperature, a weight in an energy function, a bias value, and a constant term.

(S11) The CPU 101 randomly sets initial states of the search for the search units 210, 211, 212, ...

(S12) The CPU 101 instructs the search units 210, 211, 212, ... to execute solution searches.

(S13) When the searches by the search units 210, 211, 212, ... are completed, the CPU 101 acquires the solutions from the search units 210, 211, 212, ....

(S14) The CPU 101 determines whether the count of solution searches executed by the search units 210, 211, 212, ... has reached a certain count. When the solution search count has reached the certain count, the CPU 101 advances the processing to step S15. When the solution search count has not reached the certain count, the processing proceeds to step S11.

(S15) The CPU 101 outputs results of the solution searches. For example, the CPU 101 notifies the user of the final solution that is one with the lowest energy value among the plurality of solutions acquired from the search units 210, 211, 212, ....

Unfortunately, with the procedure illustrated in FIG. 9, the solutions are relatively likely to be stuck at a local solution due to a certain value of a variable not to be included in the optimal solution for some problems as in the example of the knapsack problem described above, and escape from the local solution may be difficult.

In view of this, the information processing apparatus 100 evaluates the probability of each set of a candidate variable and a candidate value of the candidate variable of being included in the optimal solution, and designates a candidate variable to be fixed and a candidate value to the search units 210, 211, 212, ... based on the probability. This leads to a higher chance of the searches by the search units 210, 211, 212, ... being executed in a state reflecting a set of a candidate variable and a candidate value that is anticipated to have a high probability of being included in the optimal solution, whereby a possibility of reaching the optimal solution may be increased.

With the information processing apparatus 100, local searches with a candidate variable fixed to a candidate value are combined in accordance with the probability of being included in the optimal solution, whereby a global search may be executed efficiently with establishment of a state where the optimal solution is anticipated to be unachievable suppressed.

The information processing apparatus 100 gradually increases the combination size of the candidate variables, and obtains the probability of sets of a plurality of candidate variables and a plurality of candidate values being included in the optimal solution, so that the possibility of reaching the optimal solution may be further increased. The search space may be gradually narrowed down, and the efficiency of the search is further increased.

In summary, the information processing apparatus 100 has, for example, the following functions.

The variable fixation control unit 140 outputs, as an instruction to fix a candidate variable to a candidate value, an instruction to execute the search with the variable fixed to the candidate value over the entire search period or over a part of the search period. The instruction from the variable fixation control unit 140 is output to the search units 210, 211, 212, ..., the control unit of the optimization apparatus 200, or the like through the IO interface 104.

Thus, a search may be performed in a state reflecting a set of a candidate variable and a candidate value anticipated to have a high possibility of being included in the optimal solution, whereby the possibility of reaching the optimal solution may be increased.

The variable fixation control unit 140 preferentially selects a set of a variable and a candidate value anticipated to have a high possibility of being included in the optimal solution among a plurality of sets, based on the probability of each set of a candidate variable and a candidate value. In the example of the second embodiment, a set with a higher probability is anticipated to have a higher possibility of being included in the optimal solution, and thus the sets are selected in the descending order of the probability. This may increase the possibility of any of the search units 210, 211, 212, ... swiftly reaching the optimal solution.

The probability update unit 130 acquires, for each set of a candidate variable and a candidate value, an energy value corresponding to the best solution among solutions in which the candidate variable is of the candidate value. The probability update unit 130 calculates a probability for the set of the candidate variable and the candidate value based on a ratio between the worst one of the acquired energy values of the best solutions for the sets and the energy value corresponding to the best solution in which the candidate variable is of the candidate value. Thus, the possibility of the corresponding candidate value of the corresponding candidate variable being included in the optimal solution may be appropriately evaluated.

For each of the plurality of sets of the selected candidate variable and the candidate value, the variable fixation control unit 140 outputs an instruction to fix the candidate variable to the candidate value. The probability update unit 130 acquires a plurality of solutions in which the selected candidate variable is of the candidate value from the search units 210, 211, 212, ..., and updates the probability of each set of the candidate variable and the candidate value, based on the plurality of acquired solutions and the plurality of energy values corresponding to the plurality of solutions.

By updating the probability of each set of a candidate variable and a candidate value being included in the optimal solution based on the latest result of the solution search, the possibility of reaching the optimal solution may further be increased with the previous probability corrected.

Based on the plurality of solutions and the plurality of energy values corresponding to the plurality of solutions, the probability update unit 130 calculates a probability of the candidate value of the candidate variable and another candidate value of another candidate variable being included in the optimal solution for each set of the variable, the other variable, the candidate value, and the other candidate value. The variable fixation control unit 140 selects the first candidate value of the first variable and the second candidate value of the second variable based on the probability of each set. The variable fixation control unit 140 outputs an instruction to execute a search with the first variable fixed to the first candidate value and the second variable fixed to the second candidate value.

A larger number of variables included in a set that is a target of calculating the probability of being included in the optimal solution enables the search spaces of the search units 210, 211, 212, ... to be more effectively narrowed down, whereby the searches may be efficiently performed.

For example, after calculating the probability of each set of a candidate variable and a candidate value being included in the optimal solution, the probability update unit 130 increases the number of variables included in the set that is the target of the next calculation for the probability.

Thus, a range anticipated to include the optimal solution in the search spaces of the search units 210, 211, 212, ... may be gradually narrowed down from a wide range to a narrow range, whereby a possibility of reaching the optimal solution may further be increased.

The information processing according to the first embodiment may be realized by the processing unit 11 to execute a program. The information processing according to the second embodiment may be realized by causing the CPU 101 to execute a program. The program may be recorded in the recording medium 113 that is computer readable.

For example, it is possible to circulate the program by distributing the recording medium 113 in which the program is recorded. The program may be stored in another computer, and the program may be distributed through a network. For example, the computer may store (install), in a storage device such as the RAM 102 or the HDD 103, the program recorded in the recording medium 113 or the program received from the other computer, and may read the program from the storage device to execute the program.

In any of the above aspects, the various features may be implemented in hardware, or as software modules running on one or more processors/computers.

The invention also provides a computer program or a computer program product comprising instructions which, when executed by a computer, cause the computer to carry out any of the methods/method steps described herein, and a non-transitory computer-readable medium comprising instructions which, when executed by a computer, cause the computer to carry out any of the methods/method steps described herein. A computer program embodying the invention may be stored on a non-transitory computer-readable medium, or it could, for example, be in the form of a signal such as a downloadable data signal provided from an Internet website, or it could be in any other form.

## Claims

1.  An information processing system, comprising:

    a processing unit configured to:

    acquire a plurality of solutions each represented by values of a plurality of variables included in an energy function;
    calculate, for each of a plurality of sets of a variable among the plurality of variables and a candidate value of the variable, an index indicating a possibility of a certain candidate value corresponding to a certain variable being included in a solution that is better than a currently obtained solution or in an optimal solution in a predetermined evaluation scale, based on the plurality of solutions and values of the energy function respectively corresponding to the plurality of solutions; and
    select one set from the plurality of sets based on the index calculated for each of the plurality of sets; and

    an output unit configured to output an instruction to execute another search for another solution with the variable included in the selected one set fixed to the corresponding candidate value.

2.  The information processing system according to claim 1, wherein the variable included in the selected one set is fixed to the corresponding candidate value over an entire period of the another search or over a part of the period of the another search.

3.  The information processing system according to claim 1 or 2, wherein
    the processing unit is further configured to:
    preferentially select, as the selected one set, a first set such that the index calculated for the first set indicates the possibility higher than the possibility indicated by the index calculated for any other set among the plurality of sets, based on the index calculated for each of the plurality of sets.

**4.** The information processing system according to any of the preceding claims, wherein
the processing unit is further configured to:

acquire, for each of the plurality of sets, a best value of the energy function corresponding to a best solution among solutions in which the variable is of the corresponding candidate value; and
calculate the index based on a ratio between a worst value among acquired best values of the energy function and the best value of the energy function acquired for each of the plurality of sets.

**5.** The information processing system according to any of the preceding claims, wherein
the processing unit is further configured to:

select two or more sets from the plurality of sets based on the index calculated for each of the plurality of sets;
acquire two or more solutions in which the variable included in the two or more selected sets is of the corresponding candidate value; and
update the index for each of the two or more sets based on the two or more acquired solutions and values of the energy function respectively corresponding to the two or more solutions, and
the variable included in each of the two or more selected sets is fixed to the corresponding candidate value while the other search is executed.

**6.** The information processing system according to any of the preceding claims, wherein
the processing unit is further configured to:

calculate, for each of a plurality of sets of n variables among the plurality of variables and n candidate values of the respective n variables, an index indicating a possibility of n candidate values corresponding to respective n variables being included in a solution that is better than the currently obtained solution or in the optimal solution, based on the plurality of solutions and values of the energy function respectively corresponding to the plurality of solutions, n being a natural number that is equal to or greater than 2; and
select one set of the n variables and the n candidate values based on the index calculated for each of the plurality of sets of the n variables and the n candidate values, and
the n variables included in the selected set are fixed to the n respective candidate values while the other search is executed.

**7.** The information processing system according to claim 6, wherein
the processing unit is further configured to:
increment n after calculating the index for each of the plurality of sets of the n variables and the n candidate values.

**8.** The information processing system according to any of the preceding claims, further comprising:

a search unit configured to execute a search for a solution represented by values of the plurality of variables included in the energy function,
wherein
the processing unit is further configured to:

acquire the plurality of solutions from the search unit; and
output the instruction to the search unit.

**9.** A program that causes a computer to execute a process, the process comprising:

acquiring a plurality of solutions each represented by values of a plurality of variables included in an energy function;
calculating, for each of a plurality of sets of a variable among the plurality of variables and a candidate value of the variable, an index indicating a possibility of a certain candidate value corresponding to a certain variable being included in a solution that is better than a currently obtained solution or in an optimal solution in a predetermined evaluation scale, based on the plurality of solutions and values of the energy function respectively corresponding to the plurality of solutions;
selecting one set from the plurality of sets based on the index calculated for each of the plurality of sets; and
outputting an instruction to execute another search for another solution with the variable included in the selected one set fixed to the corresponding candidate value.

**10.** An information processing method, comprising:

acquiring, by a computer, a plurality of solutions each represented by values of a plurality of variables included in an energy function;

calculating, for each of a plurality of sets of a variable among the plurality of variables and a candidate value of the variable, an index indicating a possibility of a certain candidate value corresponding to a certain variable being included in a solution that is better than a currently obtained solution or in an optimal solution in a predetermined evaluation scale, based on the plurality of solutions and values of the energy function respectively corresponding to the plurality of solutions;

selecting one set from the plurality of sets based on the index calculated for each of the plurality of sets; and

outputting an instruction to execute another search for another solution with the variable included in the selected one set fixed to the corresponding candidate value.

**11.** A computer-readable medium having the program of claim 9 stored thereon.

# FIG. 1

# FIG. 2

INFORMATION PROCESSING SYSTEM 50

INFORMATION PROCESSING APPARATUS 100

CPU 101

RAM 102

HDD 103

IO INTERFACE 104

IMAGE SIGNAL PROCESSING UNIT 105

INPUT SIGNAL PROCESSING UNIT 106

MEDIUM READER 107

NIC 108

111

112

113

NETWORK 60

OPTIMIZATION APPARATUS 200

SEARCH UNIT 210 211 212

# FIG. 3

# FIG. 4

| INITIAL SETTING TABLE | | | 121 |
|---|---|---|
| CANDIDATE VARIABLE | CANDIDATE VALUE | PROBABILITY OF BEING INCLUDED IN OPTIMAL SOLUTION |
| c1 | v3 | 0.4 |
| | v6 | 0.3 |
| c2 | v2 | 0.1 |
| | v3 | 0.1 |
| | v5 | 0.1 |

# FIG. 5

| VARIABLE FIXATION CONTROL TABLE | | | |
|---|---|---|---|
| CANDIDATE VARIABLE | CANDIDATE VALUE | EXECUTION RESULT | PROBABILITY OF BEING INCLUDED IN OPTIMAL SOLUTION |
| c1 | v3 | 1000 | 0.2 |
| | v6 | 800 | 0.4 |
| c2 | v2 | 1200 | 0.1 |
| | v3 | 1300 | 0.0 |
| | v5 | 1100 | 0.2 |

122

# FIG. 6

123

| VARIABLE FIXATION CONTROL TABLE | | | |
|---|---|---|---|
| CANDIDATE VARIABLE | CANDIDATE VALUE | EXECUTION RESULT | PROBABILITY OF BEING INCLUDED IN OPTIMAL SOLUTION |
| c1,c2 | v6,v5 | 700 | 0.3 |
| c1,c2 | v6,v2 | 600 | 0.4 |
| c1,c2 | v6,v3 | 1000 | 0.0 |
| . . . | . . . | . . . | . . . |

# FIG. 7

START

S1
CAUSE START OF SEARCH WITH CANDIDATE VARIABLE FIXED TO CANDIDATE VALUE IN DESCENDING ORDER OF PROBABILITY

S2
SOLUTION WITH ENERGY VALUE EQUAL TO OR LESS THAN THRESHOLD REACHED?

YES

NO

S3
TIMED OUT?

YES

NO

S4
COLLECT EXECUTION RESULTS AND UPDATE PROBABILITY FOR EACH SET OF CANDIDATE VARIABLE AND CANDIDATE VALUE

S5
INCREMENT COMBINATION SIZE OF CANDIDATE VARIABLES

S6
COMBINATION SIZE LARGER THAN NUMBER OF CANDIDATE VARIABLES?

YES

NO

S7
DETERMINE CANDIDATE VARIABLE TO BE FIXED TO CANDIDATE VALUE BASED ON UPDATED PROBABILITY

END

# FIG. 8

bias

# FIG. 9

```
                    ( START )
                        |
                        v                        S10
        +-----------------------------------+
        |          INPUT PROBLEM            |
        +-----------------------------------+
                        |
                        v <-------------------+
                        |                     |  S11
        +-----------------------------------+ |
        |      RANDOMLY SET INITIAL STATE   | |
        +-----------------------------------+ |
                        |                     |  S12
        +-----------------------------------+ |
        | INSTRUCTION TO EXECUTE SOLUTION   | |
        |           SEARCHES                | |
        +-----------------------------------+ |
                        |                     |  S13
        +-----------------------------------+ |
        |        ACQUIRE SOLUTIONS          | |
        +-----------------------------------+ |
                        |                     |  S14
                    /--------------------\    |
                   / COUNT OF SOLUTION    \   |
                  <  SEARCHES REACHED      >--+
                   \ CERTAIN COUNT?        /  NO
                    \--------------------/
                        | YES
                        v                        S15
        +-----------------------------------+
        |          OUTPUT RESULTS           |
        +-----------------------------------+
                        |
                        v
                    (  END  )
```

Europäisches
Patentamt

European
Patent Office

Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | OTTEN R.H.J.M. ET AL: "Stop criteria in simulated annealing", VLSI IN COMPUTERS & PROCESSORS : IEEE INTERNATIONAL CONFERENCE ON COMPUTER DESIGN: VLSI IN COMPUTERS & PROCESSORS, ICCD '88, RYE BROOK, NEW YORK, OCTOBER 3 - 5, 1988, 1988, pages 549-552, XP055820098, Washington, DC DOI: 10.1109/ICCD.1988.25760 ISBN: 978-0-8186-0872-8 * pages 549 and 551 * | 1-11 | INV. G06F17/11 G06N5/00 |
| A | SHAO WEI ET AL: "Multiple-Try Simulated Annealing Algorithm for Global Optimization", MATHEMATICAL PROBLEMS IN ENGINEERING, vol. 2018, 17 July 2018 (2018-07-17), pages 1-11, XP055820066, CH ISSN: 1024-123X, DOI: 10.1155/2018/9248318 Retrieved from the Internet: URL:https://downloads.hindawi.com/journals /mpe/2018/9248318.pdf> * the whole document * | 1-11 | |
| A | US 2019/012410 A1 (MATSUBARA SATOSHI [JP] ET AL) 10 January 2019 (2019-01-10) * the whole document * | 1-11 | TECHNICAL FIELDS SEARCHED (IPC) G06F G06N |
| A | US 2018/107172 A1 (TAKATSU MOTOMU [JP]) 19 April 2018 (2018-04-19) * the whole document * | 1-11 | |
| A | JP 2019 160293 A (FUJITSU LTD) 19 September 2019 (2019-09-19) * the whole document * | 1-11 | |

The present search report has been drawn up for all claims

| Place of search | Date of completion of the search | Examiner |
|---|---|---|
| Berlin | 1 July 2021 | Huguet Serra, G |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 21 15 3119

This annex lists the patent family members relating to the patent documents cited in the above-mentioned European search report.
The members are as contained in the European Patent Office EDP file on
The European Patent Office is in no way liable for these particulars which are merely given for the purpose of information.

01-07-2021

| Patent document cited in search report | | Publication date | Patent family member(s) | | Publication date |
|---|---|---|---|---|---|
| US 2019012410 | A1 | 10-01-2019 | JP 2019016129 A<br>US 2019012410 A1 | | 31-01-2019<br>10-01-2019 |
| US 2018107172 | A1 | 19-04-2018 | JP 6465092 B2<br>JP 2018063626 A<br>US 2018107172 A1 | | 06-02-2019<br>19-04-2018<br>19-04-2018 |
| JP 2019160293 | A | 19-09-2019 | NONE | | |

EPO FORM P0459

For more details about this annex : see Official Journal of the European Patent Office, No. 12/82

**REFERENCES CITED IN THE DESCRIPTION**

**Patent documents cited in the description**

- JP 2001117773 A
- JP 2016012285 A